# EUROPÄISCHE PATENTSCHRIFT

(11) **EP 1 873 613 B1**
(45) Veröffentlichungstag und Bekanntmachung des Hinweises auf die Patenterteilung: **06.05.2009**
(21) Anmeldenummer: 07010720.6
(22) Anmeldetag: 30.05.2007
(51) Int. Cl.: G06F 1/20

(54) **Kühlanordung für ein Computersystem und Unterstützungsvorrichtung**
Cooling system for a computer system and support device
Dispositif de refroidissement pour un système informatique et dispositif d'assistance

(30) Priorität: 25.08.2006 DE 102006039961; 27.06.2006 DE 202006010024 U
(43) Veröffentlichungstag der Anmeldung: 02.01.2008
(73) Patentinhaber: Fujitsu Siemens Computers GmbH, 80807 München (DE)
(72) Erfinder: Kannler, Bernhard, 86199 Augsburg (DE); Müller-Augste, Frank, 86199 Augsburg (DE); Schmid, Michael, 89407 Dillingen (DE); Treffler, Roland, 86167 Augsburg (DE)
(74) Vertreter: Epping - Hermann - Fischer

(56) Entgegenhaltungen:
- EP-A- 1 220 313
- US-A- 6 055 159
- US-B1- 6 480 387
- US-B1- 6 639 804

## Beschreibung

Die Erfindung betrifft eine Kühlanordnung für ein Computersystem, aufweisend eine Grundplatte, eine Systemplatine, die auf der Grundpatte angeordnet ist, einen Prozessorsockel, der in einem Bereich der Systemplatine angeordnet ist, einen Prozessor, der in dem Prozessorsockel angeordnet ist, und eine Kühlvorrichtung zum Abführen von durch den Prozessor entwickelter Wärme, die auf der Systemplatine im Bereich des Prozessorsockels angeordnet und mittels Befestigungselementen an der Grundpatte befestigt ist.

Die Erfindung betrifft außerdem eine Unterstützungsvorrichtung zur Begrenzung einer Durchbiegung einer Systemplatine im Bereich eines Prozessorsockels.

Kühlanordnungen der oben genannten Art sind vielfach bekannt. Durch die immer leistungsfähigeren Prozessoren moderner Computersysteme nimmt auch die von ihnen erzeugte Abwärme zu. Daher werden auch Kühlvorrichtungen zusehends größer und aufwändiger, so dass eine Befestigung der Kühlvorrichtung an einer Grundplatte eines Computersystems nötig ist, um Schäden von der Systemplatine, dem Prozessorsockel, oder einem darin befindlichen Prozessor zu verhindern.

Bedingt durch den Anpressdruck der Kühlvorrichtung auf den Prozessor wird die Systemplatine durchgebogen, daraus resultierende Spannungen können zu Brüchen von Lötpunkten auf der Systemplatine im Bereich des Prozessor oder auch des Chipsatzes führen. Dies ist insbesondere bei der Verwendung von so genannten Ball Grid Array (BGA) Prozessorsockeln ein Problem. Das Problem wird weiterhin durch die Umstellung auf bleifreie Lötzinne verschärft, wie es gemäß der EG-Richtline 2002/95/EG zur Beschränkung der Verwendung bestimmter gefährlicher Stoffe in Elektro- und Elektronikgeräten vorgeschrieben ist.

Aus den Dokumenten EP 1 220 313 A1, US 6,055,159, US 6,639,804 B1 und US 6,480,387 B1 sind weitere Kühlanordnungen für Computersysteme bekannt,

Ein weiteres Problem für Hersteller von Computersystemen besteht darin, nach Möglichkeit nur einen oder wenige Gehäusetypen beziehungsweise Grundplatten mit einer Vielzahl unterschiedlicher Systemplatinen, Prozessorsockel und Prozessoren zu verwenden. Insbesondere ist für Prozessoren von AMD eine Durchbiegung der Systemplatine im Bereich von 0 bis 0,5 Millimeter erlaubt. Dahingegen verlangt Intel eine Durchbiegung der Systemplatine von einem Millimeter im Bereich des Prozessorsockels, um auf die Kühlvorrichtung einwirkende Kräfte abzufedern.

Auch die Anordnung der Prozessoren und Prozessorsockel von AMD beziehungsweise Intel unterscheidet sich voneinander. Die Intelprozessoren sind in einem Winkel von 45 Grad zu den Außenkanten der Systemplatine angeordnet. Die Prozessoren von AMD sind hingegen parallel zu den Außenkanten der Systemplatine angeordnet. Dies erfordert unterschiedliche Auflagepunkte zum Unterstützen der Systemplatine im Bereich des Prozessorsockels.

Ein von Intel vorgeschlagener Lösungsansatz besteht darin, ein so genanntes Support Retention Module (SRM) zu verwenden. SRM-Module sind von Intel in der so genannten Balance Technologie Extended (BTX) Spezifikation normiert. Diese besitzen jedoch den Nachteil, dass sie nur mit einem einzigen Prozessortyp verwendet werden können. Des Weiteren sind SRM-Module in der Regel in die Grundplatte eines Computersystems eingeprägt und bestehen daher aus Metall. Dies kann zu Kurzschlüssen auf der Unterseite der Systemplatine führen, so dass eine gesonderte Isolierung nötig wird.

Aufgabe der vorliegenden Erfindung ist es daher, eine Kühlanordnung der oben genanten Art zu beschreiben, bei der eine Durchbiegung der Systemplatine im Bereich des Prozessorsockels innerhalb festlegbarer Grenzen eingeschränkt ist. Dabei soll die Kühlanordnung besonders flexibel einsetzbar sein, insbesondere soll sie die Verwendung unterschiedlicher Systemplatinen, Prozessorsockel und Prozessortypen gestatten.

Die Aufgabe wird durch eine Kühlanordnung der oben genannten Art gelöst, die dadurch gekennzeichnet ist, dass zwischen der Grundplatte und der Systemplatine im Bereich des Prozessorsockels eine Unterstützungsvorrichtung angeordnet ist, welche die Durchbiegung der Systemplatine im Bereich des Prozessorsockels festlegt. Dabei ist die Unterstützungsvorrichtung durch Aufnahme eines Zusatzteils an die Systemplatine, den Prozessorsockel und/oder den Prozessor anpassbar.

In einer vorteilhaften Ausgestaltung wird das Zusatzteil mittels Rastmittel an der Unterstützungsvorrichtung festgelegt.

Gemäß einer weiteren vorteilhaften Ausgestaltung besteht das Zusatzteil und/oder die Unterstützungsvorrichtung aus einem nicht-leitenden Material, insbesondere Kunststoff. Die Verwendung nicht-leitender Materien verhindert Kurzschlüsse der Systemplatine im Falle des Durchbiegens, auch ohne Verwendung einer gesonderten Isolierung.

Die Aufgabe wird ebenso gelöst durch eine Unterstützungsvorrichtung zur Begrenzung einer Durchbiegung einer Systemplatine im Bereich eines Prozessorsockels nach Anspruch 8.

Gemäß einer vorteilhaften Ausgestaltung weist die Unterstützungsvorrichtung erste Auflagepunkte auf, die eine Durchbiegung eines ersten Typs einer Systemplatine festlegen, und das Zusatzteil ist an der Unterstützungsvorrichtung befestigbar und weist zweite Auflagepunkte auf, die eine Durchbiegung eines zweiten Typs einer Systemplatine festlegen.

Durch die Verwendung von ersten und zweiten Auflagepunkten können unterschiedliche Krafteinleitungspunkte zum Gegenhalten der Systemplatine im Bereich des Prozessorsockels für unterschiedliche Systemplatinen bereitgestellt werden.

Weitere Einzelheiten und Ausgestaltungen sind in den Unteransprüchen angegeben.

Die Erfindung wird nachfolgend an einem Ausführungsbeispiel anhand der Zeichnungen näher erläutert.

In den Zeichnungen zeigen:
Figur 1 eine Explosionszeichnung eines Computersystems mit einer Kühlanordnung gemäß einer Ausgestaltung der Erfindung und
Figur 2 eine Detailzeichnung einer Unterstützungsvorrichtung gemäß einer Ausgestaltung der Erfindung.

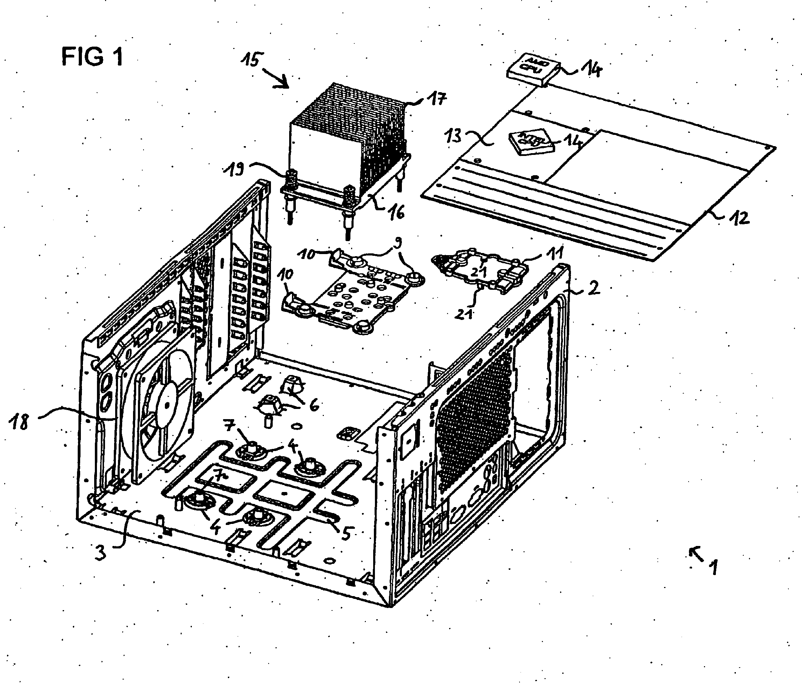

Figur 1 zeigt ein Computersystem 1. Das Computersystem 1 weist ein Chassis 2 auf, in das eine Grundplatte 3 eingearbeitet ist. Die Grundplatte 3 weist eine Vielzahl von Befestigungsmöglichkeiten auf, insbesondere Einprägungen 4, eine Vertiefung 5 und Ausprägungen 6 mit Schraubenöffnungen.

Im Ausführungsbeispiel dienen die Einprägungen 4 zum Festlegen von Abstandshaltern 7, die durch einfaches Eindrehen in den Einprägungen 4 befestigt werden können. Unterhalb der Abstandshalter 7 befinden sich Befestigungsöffnungen in der Grundplatte 3, in die durch die Abstandshalter 7 geführte Schrauben eingreifen können.

Zur Unterstützung unterschiedlicher Systemplatinen und Prozessoren wird eine Unterstützungsvorrichtung 8 im Bereich der Abstandshalter 7 angeordnet. Dabei greifen die Abstandshalter 7 durch Öffnungen 9 der Unterstützungsvorrichtung 8 hindurch und legen diese somit auf der Grundplatte 3 fest. Zusätzlich weist die Unterstützungsvorrichtung 8 Führungselemente 10 auf, die eine Positionierung der Unterstützungsvorrichtung 8 mit Hilfe der Vertiefung 5 der Grundplatte 3 gestatten.

Je nach verwendetem Prozessortyp kann zusätzlich noch ein Zusatzteil 11 an der Unterstützungsvorrichtung 8 eingepasst werden oder nicht. Zur Befestigung des Zusatzteils 11 werden in dem Ausführungsbeispiel Rastmittel 21 verwendet, die ein Einschnappen des Zusatzteil 11 an der Unterstützungsvorrichtung 8 bewirken.

Oberhalb der Unterstützungsvorrichtung 8 ist eine Systemplatine 12 angeordnet, die beispielsweise mittels der Ausprägungen 6 an der Grundplatte 3 befestigt werden kann. In einem Bereich 13 der Systemplatine 12 ist ein Prozessorsockel angeordnet, der im dargestellten Ausführungsbeispiel jedoch durch einen Prozessor 14 verdeckt ist.

Im Ausführungsbeispiel ist eine Intel-CPU als Prozessor 14 dargestellt. Dieser ist in einem Winkel von 45 Grad mit Bezug auf die Außenkanten der Systemplatine 12 angeordnet. Alternativ ist auch die Verwendung eines anderen Prozessortyps möglich. In der Figur 1 wird dies durch den parallel zu den Außenkanten der Systemplatine 12 angeordneten AMD-Prozessor 14 angedeutet.

Nach der Montage der Systemplatine 12 und des Prozessors 14 in dem Computersystem 1 wird in dem Bereich 13 eine Kühlvorrichtung 15 zum Abführen der Wärme von dem Prozessor 14 befestigt. Im dargestellten Ausführungsbeispiel umfasst die Kühlvorrichtung 15 eine Kontaktplatte 16, die mit einer vorbestimmten Kraft auf eine Kontaktfläche des Prozessors 14 niedergedrückt wird. Oberhalb der Kontaktplatte 16 befinden sich Kühlrippen 17, durch die Luft zum Abführen von Wärme geführt wird, beispielsweise indem die Kühlvorrichtung 15 im Bereich eines Gehäuselüfters 18 angeordnet wird.

Die Kühlvorrichtung 15 wird mittels Befestigungselementen 19 direkt an der Grundplatte 3 des Computersystems 1 befestigt. In dem Ausführungsbeispiel handelt es sich bei dem Befestigungselement 19 um Schrauben, die durch Öffnungen der Systemplatine 12, die Öffnungen 9 der Unterstützungsvorrichtung 8 und die Abstandshalter 7 geführt werden. Um den Anpressdruck der Kühlvorrichtung 15 auf den Prozessor 14 genau einzustellen, befinden sich zwischen den Schraubenköpfen und der Kontaktplatte 16 Federelemente.

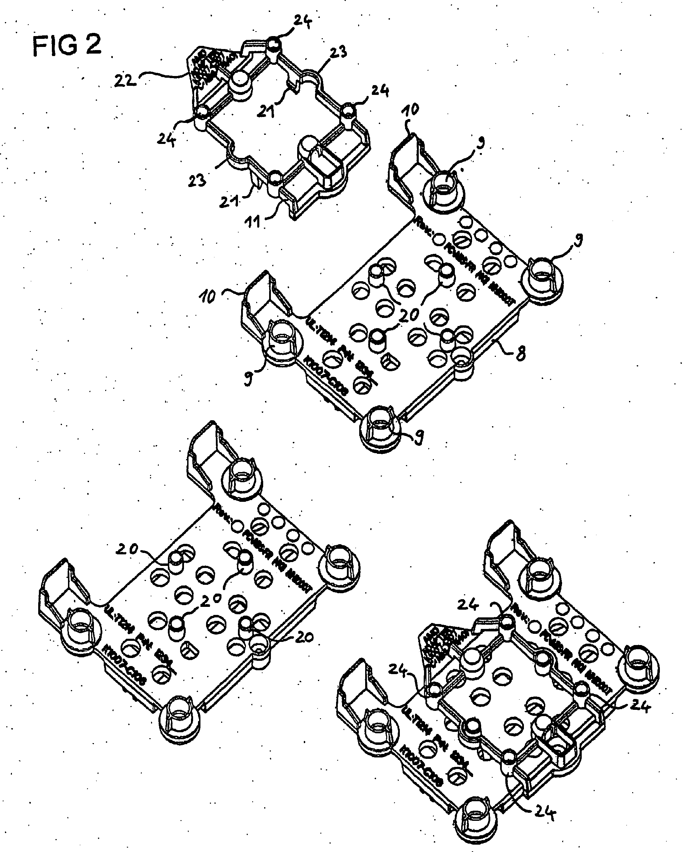

Figur 2 zeigt eine vergrößerte Darstellung der Unterstützungsvorrichtung 8 und des Zusatzteils 11. Außer den Öffnungen 9 und den Führungselementen 10 weist die Unterstützungsvorrichtung 8 erste Auflagepunkte 20 auf, die die Durchbiegung der Systemplatine 12 im Bereich 13 des Prozessorsockels festlegen.

Das Zusatzteil 11 weist Rastmittel 21 sowie eine Lasche 22 auf, die ein einfaches Verrasten und Entrasten des Zusatzteils 11 an der Unterstützungsvorrichtung 8 gestatten. Zusätzlich weist das Zusatzteil 11 Ausbuchtungen 23 auf, die um zwei der ersten Auflagepunkte 20 der Unterstützungsvorrichtung 8 greifen. Außerdem weist das Zusatzteil 11 zweite Befestigungspunkte 24 auf, die die Durchbiegung eines zweiten Typs einer Systemplatine 12 im Bereich eines Prozessorsockels begrenzen.

Im unteren Teil der Figur 2 ist die unterschiedliche Wirkungsweise der Unterstützungsvorrichtung 8 ohne beziehungsweise mit Zusatzteil 11 dargestellt. Ohne Zusatzteil 11 weist die Unterstützungsvorrichtung 8 vier Auflagepunkte 20 auf, die beispielsweise einen im 45 Grad Winkel angeordneten Intel-Prozessor unterstützen. Die ersten Auflagepunkte 20 sind so ausgestaltet, dass sie eine Durchbiegung einer Systemplatine 12 von bis zu einem Millimeter im Bereich 13 eines Prozessorsockels zulassen.

In Verbindung mit dem Zusatzteil 11 weist die Unterstützungsvorrichtung 8 sechs Auflagepunkte auf, wobei zwei Auflagepunkte durch die ersten Auflagepunkte 20 der Unterstützungsvorrichtung 8 selbst und die vier zusätzlichen Auflagepunkte durch die zweiten Auflagepunkte 24 des Zusatzteils 11 gebildet werden. Die zweiten Auflagepunkte 24 sind so ausgestaltet, dass sie eine Durchbiegung eines zweiten Typs einer Systemplatine 12 im Bereich 13 eines Prozessors 14 nur im Bereich von 0 bis 0,5 Millimeter gestatten. Außerdem sind sie so angeordnet, dass sie sich für einen Prozessor 14 eignen, die parallel zu den Seiten der Systemplatine 12 und somit auch parallel zu den Seiten der Unterstützungsvorrichtung 8 ausgerichtet ist.

In dem dargestellten Ausführungsbeispiel sind sowohl die Unterstützungsvorrichtung 8 als auch das Zusatzteil 11 aus Kunststoff gefertigt. Dies hat den Vorteil, dass die Unterstützungsvorrichtung 8 als Isolator zwischen der Grundplatte 3 und der Systemplatine 12 wirkt, so dass auch beim Durchbiegen der Systemplatine 12 keine Kurzschlüsse entstehen können.

Obwohl im Ausführungsbeispiel nur ein einzelnes Zusatzteil 11 dargestellt ist, können selbstverständlich unterschiedliche Zusatzteile 11 zum Einsatz kommen, die individuell an unterschiedliche Prozessortypen beziehungsweise Prozessorsockel angepasst sind. Somit kann die erfindungsgemäße Unterstützungsvorrichtung 8 mit einer Vielzahl von gegenwärtigen und zukünftigen Prozessortypen Verwendung finden.

Selbstverständlich ist die Erfindung nicht auf die Unterstützung von Systemplatinen 12 im Bereich 13 eines Prozessors 14 beschränkt. Vielmehr können Platinen grundsätzlich in Bereichen unterstützt werden, die besonders anfällig für eine Durchbiegung der Platine sind.

### Bezugszeichenliste

- 1: Computersystem
- 2: Chassis
- 3: Grundplatte
- 4: Einprägung
- 5: Vertiefung
- 6: Ausprägung
- 7: Abstandshalter
- 8: Unterstützungsvorrichtung
- 9: Öffnung
- 10: Führungselement
- 11: Zusatzteil
- 12: Systemplatine
- 13: Bereich (des Prozessorsockels)
- 14: Prozessor
- 15: Kühlvorrichtung
- 16: Kontaktplatte
- 17: Kühlrippe
- 18: Gehäuselüfter
- 19: Befestigungselement
- 20: erster Auflagepunkt
- 21: Rastmittel
- 22: Lasche
- 23: Ausbuchtung
- 24: zweiter Auflagepunkt

## Patentansprüche

1. Unterstützungsvorrichtung (8) zur Begrenzung einer Durchbiegung einer Systemplatine (12) im Bereich (13) eines Prozessorsockels zur Aufnahme eines Prozessors (14),
**dadurch gekennzeichnet, dass**
- die Unterstützungsvorrichtung (8) durch Aufnahme eines Zusatzteils (11) an die Systemplatine (12), den Prozessorsockel und/oder den Prozessor (14) anpassbar ist.

2. Unterstützungsvorrichtung (8) nach Anspruch 1, **dadurch gekennzeichnet, dass**
- die Unterstützungsvorrichtung (8) erste Auflagepunkte (20) aufweist, die eine Durchbiegung eines ersten Typs einer Systemplatine (12) festlegen, und
- das Zusatzteil (11) an der Unterstützungsvorrichtung (8) befestigbar ist und zweite Auflagepunkte (24) aufweist, die eine Durchbiegung eines zweiten Typs einer Systemplatine (12) festlegen.

3. Kühlanordnung für ein Computersystem (1), aufweisend
- eine Grundplatte (3),
- eine Systemplatine (12), die auf der Grundplatte (3) angeordnet ist,
- einen Prozessorsockel, der in einem Bereich (13) der Systemplatine (12) angeordnet ist,
- einen Prozessor (14), der in dem Prozessorsockel angeordnet ist, und
- eine Kühlvorrichtung (15) zum Abführen von durch den Prozessor (14) entwickelter Wärme, die auf der Systemplatine (12) im Bereich (13) des Prozessorsockels angeordnet und mittels Befestigungselementen (19) an der Grundplatte (3) befestigt ist,
**dadurch gekennzeichnet, dass**
zwischen der Grundpatte (3) und der Systemplatine (12) im Bereich (13) des Prozessorsockels eine Unterstützungsvorrichtung (8) mit sämtlichen Merkmalen des Patentanspruchs 1 angeordnet ist.

4. Kühlanordnung nach Anspruch 3,
**dadurch gekennzeichnet, dass**
das Zusatzteil (11) mittels Rastmitteln (21) an der Unterstützungsvorrichtung (8) festlegbar ist.

5. Kühlanordnung nach Anspruch 3 oder 4,
**dadurch gekennzeichnet, dass**
das Zusatzteil (11) und/oder die Unterstützungsvorrichtung (8) aus einem nicht-leitenden Material, insbesondere Kunststoff, bestehen.

6. Kühlanordnung nach einem der Ansprüche 3 bis 5,
**dadurch gekennzeichnet, dass**
- die Unterstützungsvorrichtung (8) erste Auflagepunkte (20) aufweist, die die Durchbiegung der Systemplatine (12) im Bereich (13) des Prozessorsockels begrenzen, und
- das Zusatzteil (11) zweite Auflagepunkte (24) aufweist, die die Durchbiegung der Systemplatine (12) im Bereich (13) des Prozessorsockels begrenzen.

7. Kühlanordnung nach einem der Ansprüche 3 bis 6,
**dadurch gekennzeichnet, dass**
die Unterstützungsvorrichtung (8) Öffnungen (9) aufweist, durch welche die Befestigungselemente (19) durchgreifen, so dass die Unterstützungsvorrichtung (8) im Bereich (13) des Prozessorsockels festgelegt ist.

8. Kühlanordnung nach einem der Ansprüche 3 bis 7,
**dadurch gekennzeichnet, dass**
- die Befestigungselemente (19) Abstandshalten umfassen und
- die Grundplatte (3) Einprägungen (4) aufweist, durch die Abstandshalter (7) gehalten werden.

9. Kühlanordnung nach einem der Ansprüche 3 bis 8,
**dadurch gekennzeichnet, dass**
die Unterstützungsvorrichtung (8) durch die Aufnahme des Zusatzteils (11) zusätzlich an die Kühlvorrichtung (15) anpassbar ist.

## Claims

1. Support device (8) for limiting flexure of a system board (12) in the region (13) of a processor socket for receiving a processor (14),
**characterized in that**
- the support device (8) can be adapted to the system board (12), the processor socket and/or the processor (14) by receiving an additional part (11).

2. Support device (8) according to Claim 1,
**characterized in that**
- the support device (8) has first bearing points (20) which determine a first type of flexure of a system board (12), and
- the additional part (11) can be fastened to the support device (8) and has second bearing points (24) which determine a second type of flexure of a system board (12).

3. Cooling arrangement for a computer system (1), having
- a base plate (3),
- a system board (12) which is arranged on the base plate (3),
- a processor socket which is arranged in a region (13) of the system board (12),
- a processor (14) which is arranged in the processor socket, and
- a cooling device (15) for dissipating heat which is generated by the processor (14), which device is arranged on the system board (12) in the region (13) of the processor socket and is fastened to the base plate (3) by means of fastening elements (19),
**characterized in that**
a support device (8) having all of the features of Patent Claim 1 is arranged between the base plate (3) and the system board (12) in the region (13) of the processor socket.

4. Cooling arrangement according to Claim 3,
**characterized in that**
the additional part (11) can be secured to the support device (8) using latching means (21).

5. Cooling arrangement according to Claim 3 or 4,
**characterized in that**
the additional part (11) and/or the support device (8) is/are composed of a non-conductive material, in particular plastic.

6. Cooling arrangement according to one of Claims 3 to 5,
**characterized in that**
- the support device (8) has first bearing points (20) which limit the flexure of the system board (12) in the region (13) of the processor socket, and
- the additional part (11) has second bearing points (24) which limit the flexure of the system board (12) in the region (13) of the processor socket.

7. Cooling arrangement according to one of Claims 3 to 6,
**characterized in that**
the support device (8) has openings (9) through which the fastening elements (19) engage, with the result that the support device (8) is secured in the region (13) of the processor socket.

8. Cooling arrangement according to one of Claims 3 to 7,
**characterized in that**
- the fastening elements (19) comprise spacers, and
- the base plate (3) has indentations (4) which are used to hold spacers (7).

9. Cooling arrangement according to one of Claims 3 to 8,
**characterized in that**
the support device (8) can be additionally adapted to the cooling device (15) by receiving the additional part (11).

## Revendications

1. Dispositif d'assistance (8) pour la limitation de la flèche d'une platine système (12) dans la région (13) d'un socle de processeur destiné à recevoir un processeur (14), **caractérisé en ce que** le dispositif d'assistance (8) peut être adapté par la réception d'une pièce supplémentaire (11) sur la platine système (12), le socle de processeur (13) et/ou le processeur (14).

2. Dispositif d'assistance (8) selon la revendication 1, **caractérisé en ce que**
- le dispositif d'assistance (8) présente des premiers points d'appui (20), qui fixent une flèche d'un premier type d'une platine système (12), et
- la pièce supplémentaire (11) peut être fixée sur le dispositif d'assistance (8) et présente des seconds points d'appui (24), qui fixent une flèche d'un second type d'une platine système (12).

3. Dispositif de refroidissement pour un système informatique (1), comprenant:
- une plaque de base (3),
- une platine système (12), qui est disposée sur la plaque de base (3),
- un socle de processeur, qui est disposé dans une région (13) de la platine système (12),
- un processeur (14), qui est disposé dans le socle de processeur, et
- un dispositif de refroidissement (15) pour évacuer la chaleur dégagée par le processeur (14), qui est disposé sur la platine système (12) dans la région (13) du socle de processeur et qui est fixé à la plaque de base (3) au moyen d'éléments de fixation (19),
**caractérisé en ce qu'**un dispositif d'assistance (8) présentant l'ensemble des caractéristiques de la revendication 1 est disposé entre la plaque de base (3) et la platine système (12) dans la région (13) du socle de processeur.

4. Dispositif de refroidissement selon la revendication 3, **caractérisé en ce que** la pièce supplémentaire (11) peut être fixée au dispositif d'assistance (8) au moyen de taquets d'encliquetage (21).

5. Dispositif de refroidissement selon la revendication 3 ou 4, **caractérisé en ce que** la pièce supplémentaire (11) et/ou le dispositif d'assistance (8) sont constitués d'une matière non conductrice, en particulier de matière plastique.

6. Dispositif de refroidissement selon l'une quelconque des revendications 3 à 5, **caractérisé en ce que**
- le dispositif d'assistance (8) présente des premiers points d'appui (20), qui limitent la flèche de la platine système (12) dans la région (13) du socle de processeur, et
- la pièce supplémentaire (11) présente des seconds points d'appui (24), qui limitent la flèche de la platine système (12) dans la région (13) du socle de processeur.

7. Dispositif de refroidissement selon l'une quelconque des revendications 3 à 6, **caractérisé en ce que**
- le dispositif d'assistance (8) présente des ouvertures (9), que traversent les éléments de fixation (19), de telle manière que le dispositif d'assistance (8) soit fixé dans la région (13) du socle de processeur.

8. Dispositif de refroidissement selon l'une quelconque des revendications 3 à 7, **caractérisé en ce que**
- les éléments de fixation (19) comportent des pièces d'écartement, et
- la plaque de base (3) présente des empreintes (4), qui tiennent les pièces d'écartement (7).

9. Dispositif de refroidissement selon l'une quelconque des revendications 3 à 8, **caractérisé en ce que**
- le dispositif d'assistance (8) peut en plus être adapté au dispositif de refroidissement (15) par la réception de la pièce supplémentaire (11).
